## Europäisches Patentamt
## European Patent Office
## Office européen des brevets

(19)

(11) Numéro de publication: **0 037 336 B1**

(12)

# FASCICULE DE BREVET EUROPEEN

(45) Date de publication du fascicule du brevet: **11.01.84**

(51) Int. Cl.³: **B 23 K 1/00**

(21) Numéro de dépôt: **81400493.3**

(22) Date de dépôt: **27.03.81**

(54) **Presse à braser par induction sur une surface plane d'une pièce métallique, un revêtement conducteur thermique.**

(30) Priorité: **28.03.80 FR 8007016**

(43) Date de publication de la demande:
**07.10.81 Bulletin 81/40**

(45) Mention de la délivrance du brevet:
**11.01.84 Bulletin 84/2**

(84) Etats contractants désignés:
**BE CH DE GB IT LI NL**

(56) Documents cités:
**DE - B - 1 117 795**
**FR - A - 2 065 763**
**FR - A - 2 087 327**

(73) Titulaire: **Société SAPHYMO-STEL, 29, avenue Carnot, F-91301 Massy (FR)**

(72) Inventeur: **Reboux, Jean, THOMSON-CSF SCPI 173, bld Haussmann, F-75360 Paris Cedex 08 (FR)**
Inventeur: **Seris, Jean-Marie, THOMSON-CSF SCPI 173, bld Haussmann, F-75360 Paris Cedex 08 (FR)**

(74) Mandataire: **Schmolka, Robert et al, THOMSON-CSF SCPI 173, Bld Haussmann, F-75379 Paris Cedex 08 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Presse a braser par induction sur une surface plane d'une piece metallique, un revetement conducteur thermique

L'invention concerne une presse à braser par induction sur une face plane d'une pièce métallique pouvant être un embouti en acier inoxydable ou analogue, un revêtement en un autre métal, bon conducteur thermique, tel que par exemple, une plaque en alluminium ou en son alliage.

De telles presses à braser sont bien connues et décrites, par exemple, dans la publication FR-A-1 166 952, où la pièce polaire ou mâchoire inférieure de la presse, appelée dans ce qui suit mandrin, qui supporte l'embouti en acier ou autre matériau ferreux, est réalisé en un matériau réfractaire, mécaniquement résistant et »semiconducteur« de la chaleur, c'est-à-dire »dont la chaleur spécifique et la conductibilité thermique sont choisies telles que, lors de la montée en température, les pertes de calories à travers les mâchoires restent relativement faibles pour permettre une montée rapide, mais qui, lors de la descente de température, se montre néanmoins suffisante pour que l'évacuation des calories soit assez rapide« pour descendre au moins légèrement sous la température de brasage après le cycle de chauffage. En effet le mandrin réfractaire est chauffé par l'intermédiaire de l'embouti et il est apparu avantageux à la demanderesse qu'il conserve, au moins en ce qui concerne ses parties voisines à et, notamment, celles au contact du fond de l'embouti, une température légèrement inférieure à celle du brasage, de façon à le réchauffer pendant son tranfert sous la mâchoire supérieure comprenant le bloc inducteur. Il y est dit, par ailleurs, que le mandrin ou sochle est d'une façon générale réalisé en un matériau »de faible conductivité et, par conséquent, de faible inertie thermique« (voir page 2, colonne de gauche, paragraphe 3). On y a également proposé de le chauffer à l'aide d'une résistance électrique. Dans l'addition FR-E-73 672 à la publication précitée, le mandrin comprend un corps métallique (acier ou cuivre, refroidi ou non) recouvert d'un disque intercalaire en amiante sur lequel repose la face interne du fond de l'embouti, dont l'autre face doit être recouverte par le revêtement diffuseur. Il y a été également proposé d'intercaler entre la face inférieure du bloc inducteur en résine et la face supérieure du revêtement, un disque d'épaisseur donnée, réalisé en un matériau réfractaire ayant une conductibilité thermique faible tel que le carton d'amiante, le mica, l'alumine, la silice ou toute combinaison stratifiée ou non, de ces divers produits. Deux ou plusieurs mandrins peuvent y être montés sur un plateau »revolver« (tournant) et bénéficier d'un refroidissement par l'air ambiant pendant leur tranfert circulaire.

Dans la publication FR-A-1 425 005, une couche de matière réfractaire et électriquement et thermiquement isolante est insérée entre le bloc inducteur et la pièce à chauffer par induction, mais la matière dont est fait le support de l'embouti constituant la mâchoire inférieure, mobile de la presse, n'est pas spécifiée.

Des diverses publications antérieures de la demanderesse concernant les presses à braser de ce type, notamment FR-A-2 087 327 (voir préambule de la revendication 1), 2 087 328, 2 105 660, 2 109 276, 2 153 620, 2 366 907 et 2 401 735 (les deux dernières correspondant à la DE-A-2 744 861), la partie supérieure, réfractaire du mandrin, dont la face supérieure entre en contact avec la face intérieure du fond de l'embouti, a été décrite comme réalisée à l'aide d'un composé d'amiante et de ciment. D'autres pièces réfractaires des presses à braser décrits dans les publications FR-A-2 336 907 et 2 401 735 précitées, ont été réalisées au moyen d'un composé de fibres d'amiante noyés dans une résine durcissable à base de silicones donnant un produit solide et réfractaire, tel que celui commercialisé sous la dénomination de »SYNDANIO« (marque déposée) en France. Il est donc possible d'utiliser un tel produit pour réaliser la partie supérieure du mandrin de support de l'embouti.

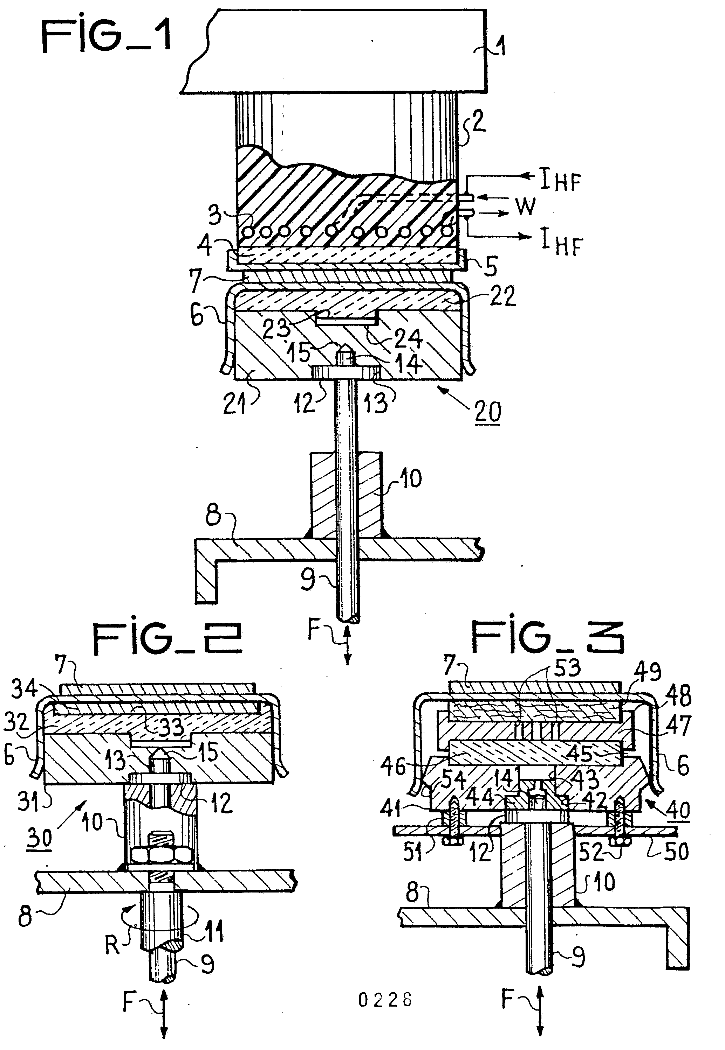

Dans la publication FR-A-2 087 327 précitée (ayant servi à délimiter la revendication 1), on a décrit et illustré sur les figures 1 et 2, une presse à braser dans laquelle la face supérieure de la partie réfractaire du mandrin porte, en outre, une plaque mince de métal ou alliage inoxydable et de faible chaleur spécifique, qui présente, par conséquent, une faible résistance thermique de contact avec le fond de l'embouti dont il toche la face intérieure. Cette plaque, de préférence en acier inoxydable, est destinée ici à porter un thermocouple devant mesurer la température du fond de l'embouti, afin d'en déduire celle qui règne dans l'interface entre ce font et le revêtement et, lorsque la température de brasage a été atteint, de commander automatiquement la coupure de l'alimentation de l'inducteur en énergie haute-fréquence. La plaque inoxydable n'a pas ici la fonction de rendre plus homogène la distribution des températures sur tout l'étendu du fond de l'embouti.

Dans la publication DE-B-1 117 795, on a décrit et illustré sur la figure 1, une presse à braser comportant deux mâchoires opposées identiques, munies chacune d'une résistance ou d'un inducteur de chauffage qui agissent respectivement sur des corps de pression métalliques, par l'intermédiaire desquels ils chauffent respectivement le fond de l'embouti et le revêtement qu'ils compriment. Ces corps de pression métalliques sont respectivement réunis à des tiges de vérins ou de positionnement, à l'aide de douilles ou fourreaux qui peuvent être thermiquement isolés de ces tiges au moyen de garnitures réfractaires permettant de réduire ou d'éviter la déperdition de la chaleur par conduction. Toutefois, aucune disposition d'homogénéisation des températures n'y est prévue.

La demanderesse a envisagé de remplacer la mince plaque en acier inoxydable de la publication FR-A-2 087 327 par une plaque analogue en un métal bon conducteur de température, tel que le cuivre ou l'aluminium, ou leurs alliages respectifs, afin d'homogénéiser la température sur tout l'étendu du fond de l'embouti. Toutefois, l'expérience a montrée qu'un tel disque ne remplit correctement ce rôle qu'au cours d'un relativement faible nombre d'opérations de brasage (une ou quelques dizaines, par exemple), notamment du fait que l'oxydation accélérée sous l'effet de la température élevée (du cuivre ou de l'aluminium) entraîne une augmentation de sa résistance de contact thermique avec le fond de l'embouti et que sa déformation sous l'effet conjugué de la pression et de la chaleur produit des boursouflures (cloques) et des ondulations, si son épaisseur est faible. Lorsque l'épaisseur du disque en métal est plus forte, sa rigidité peut avoir des effets délétères sur la distribution uniforme des pressions exercées sur les deux pièces planes, l'une contre l'autre, sans éviter les effets susmentionnés de l'oxydation.

La présente invention permet d'éviter les inconvénients susmentionnés et elle procure simultanément une amélioration de la distribution des températures et des pressions sur toute l'étendu de l'interface entre le fond de l'embouti et le revêtement et une augmentation du rendement énergétique du procédé de brasage par une conservation améliorée de la chaleur dans le corps du mandrin, de façon à économiser l'énergie.

Cette conservation améliorée de la chaleur est particulièrement avantageuse, lorsque l'on utilise un plateau revolver portant une pluralité de mandrins et tournant de façon intermittente, la pose de l'embouti sur un mandrin peut être effectuée à plusieurs endroits de sorte que le mandrin peut rester découvert plus ou moins longtemps, ce qui pourrait résulter en une forte variation de sa température, sans cette conservation.

L'invention a pour objet une presse à braser par induction pour recouvrir l'une des faces du fond plan d'un pièce métallique par un revêtement métallique et comprenant monté sur un bâti fixé au sol, un bloc inducteur rigide en matériau isolant contenant un inducteur de chauffage destiné à être alimenté en courant alternatif et un vérin comprenant une tige mobile axialement et coaxiale avec le bloc, destiné à assurer le mouvement relatif de ce bloc et de la pièce portant le revêtement et à exercer une pression sur ces derniers, et au moins un mandrin destiné à supporter la pièce et comportant superposés: une base métallique couplée au bâti ou à la tige du vérin, un premier disque en un matériau réfractaire et isolant thermique, et un second disque métallique.

Suivant l'invention, chaque mandrin comporte, en outre, posé sur le second disque métallique, un troisième disque réalisé en un matériau de type connu en soi, à base de graphite expansé à structure lamellaire orientée parallèlement au fond de la pièce, présentant une forte anisotropie de sa conductibilité thermique de manière à homogénéiser la distribution de températures à l'interface de son contact avec l'autre face du fond de la pièce et une compressibilité notable de manière à uniformiser les pressions exercées sur les différentes portions de l'interface entre le fond de la pièce et le revêtement dont les dimensions radiales sont au moins légèrement inférieures à celles du troisième disque.

Le premier disque isolant réfractaire utilisé ici est, de préférence, réalisé du composé susmentionné de fibres d'amiante et de résine à base de silicone (»SYNDANIO«) sus-mentionné qui présente l'avantage par rapport au composé amiante-ciment ou au ciment réfractaire, de ne pas s'éffriter et d'être usinable.

Le second disque, de préférence en cuivre qui présente une conductibilité thermique et une capacité calorifique élevées, joue le rôle, lorsque son épaisseur est supérieure à six millimètres, d'un réservoir de chaleur conservant à la partie supérieure du mandrin une température élevée.

Le troisième disque en ce matériau lamellaire à base de graphite, dont le procédé de fabrication a été décrit dans la publication FR-A-2 065 763, tel que celui commercialisé sous la dénomination de »PAPYEX« (marque déposée) par la société française »LE CARBONE-LORRAINE«, présente de préférence, des épaisseurs comprises entre 6 et 10 millimètres. Dans ce cas, le premier disque réfractaire isolant (en »SYNDANIO«) peut présenter des épaisseurs, de préférence, comprise entre 25 et 45 millimètres ou plus.

Ces trois disques empilés, constituant la partie supérieure du mandrin, sont de préférence amovibles, tandis que la base métallique de chaque mandrin qui les porte est soit montée au bout d'une tige axialement coulissante dans un logement du plateau tournant (revolver) qui en porte plusieurs, soit fixée directement à l'extrémité libre de la tige du vérin de la presse. Cette base est, de préférence, réalisée ici en aluminium ou en un de ses alliages, tel que celui portant la dénomination commerciale de »DURAL«.

Dans une variante avantageuse des modes de réalisation susmentionnés, la base métallique, de préférence en aluminium, peut être munie d'un radiateur, par exemple, en forme de disque ou de rondelle en aluminium, fixé à la face inférieure de cette base et de dimension radiale supérieure à cette dernière afin d'accroître sa surface de contact avec l'air ambiant et de faciliter ainsi l'évacuation des calories apportées au mandrin à chaque cycle de brasage, au cours des périodes de repos.

L'invention sera mieux comprise et d'autres de ses caractéristiques et avantages ressortiront de la description qui suit et des dessins annexés s'y rapportant, donnés à titre d'exemple nonlimitatif, sur lesquels:

la figure 1 illustre une coupe axiale en élévation d'une partie de la presse à braser classique, comprenant un bloc inducteur et un mandrin dont la base métallique porte un disque d'un matériau réfractaire et isolant thermique;

la figure 2 est une coupe axiale en élévation d'un mandrin de la presse, dont le disque isolant en outre une plaque discoforme en cuivre: et,

la figure 3 est une coupe axiale en élévation du mode de réalisation préféré du mandrin de la presse suivant l'invention, comprenant un empilage d'un disque isolant réfractaire, d'un disque métallique (en cuivre) et d'un disque en graphite expansé à structure lamellaire, successivement posés sur la base d'aluminium.

Sur toutes les figures susmentionnées, les mêmes éléments ont été désignés par les mêmes nombres de repère.

Sur la figure 1, on a représenté une coupe en élévation partielle d'une presse à braser classique comprenant un mandrin de support selon la technique antérieure. La presse comporte un bâti fixé au sol (non représenté) dont une partie solidaire, en forme de potence, porte au bout de son bras horizontal 1, un bloc inducteur 2 en une résine durcissable de type époxyde (telle que celle commercialisée sous la marque déposée d'»ARALDITE« par la société suisse »CIBA-GEI-GY«). Un inducteur de chauffage 3 en forme de spirale plate (ou tronconique, ou en forme de calotte sphérique, avec des spires aux pas réguliers ou décroissants vers la périphérie, ou encore un inducteur de forme complece suivant l'enseignement de la publication FR-A-2 087 071 de la demanderesse) est noyé dans le bloc 2 à proximité de sa face inférieure plane qui est protégée de la chaleur par un disque isolant et réfractaire 4 en un matériau tel que le composé précité de fibres d'amiante et d'un résine silicone (»SYNDANIO«). La face inférieure du disque 4 est en contact avec une plaque de chauffage intermédiaire 5 en un métal ou alliage ferromagnétique, appelée »susceptor«, (qui a été décrite notamment dans la publication FR-E-75 592 qui est une seconde addition à la publication FR-A-1 166 952 précitée), sur laquelle agit principalement l'inducteur 3 alimenté en courant alternatif haute-fréquence, par exemple. L'inducteur 3 est réalisé en tube de cuivre creux de façon à pouvoir être refroidi à l'aide d'une circulation de fluide réfrigérant (eau, par exemple) qui sert également à refroidier la face inférieure du bloc 2.

Les mandrins devant chacun supporter un embouti 6, généralement en acier inoxydable, dont le fond plan doit être recouvert par brasage d'un revêtement diffuseur de chaleur sous la forme d'une plaque métallique 7 à base de cuivre ou d'aluminium, sont représentés ici comme montés sur un plateau revolver 8 à l'aide de tiges 9 coulissables axialement (dans le sens des doubles flèches F) dans des fourreaux ou douilles 10 solidaires du plateau 8 et disposés symétriquement par rapport à l'axe de ce dernier. Le plateau revolver 8 est supporté par un arbre 11 (voir figure 2) entraîné, par un mécanisme non représenté, pour tourner de façon intermittente (dans le sens de la flèche R). Chaque fois que l'axe d'un mandrin de support arrive en alignement avec les axes respectifs du bloc 2 et du vérin (hydraulique à piston, par exemple) qui n'est pas représenté, l'extrémité inférieure de la tige 9 s'engage avec celle du vérin (non représentées) qui est actionné pour pousser le mandrin contre le bloc inducteur 2, dans la position indiquée sur la figure 1.

Sur les figures 1 et 2, la tige 9 comprend à son extrémité supérieure un épaulement 12 qui, lorsqu'elle est dans sa position inférieure, bute avec sa face inférieure contre la face supérieure du fourreau de guidage 10, et qui s'insère dans une cavité 13 pratiquée dans la base du mandrin de façon à la supporter. Une saillie axiale de centrage 14, à l'extrémité supérieure de la tige 9, est insérée dans un trou axial 15 pratiqué dans le fond de la cavité inférieure 13 de la base du mandrin.

Le mandrin 20 de la figure 1 comprend une base métallique 21 en forme de cylindre qui est réalisée ici, de préférence, en un alliage d'aluminium présentant une faible densité (masse) et une bonne conductivité de température permettant d'assurer un bon refroidissement, après le brasage, de l'article fini composé de l'embouti 6 revêtu de la plaque 7, et une partie supérieure 22 réfractaire, c'est-à-dire supportant sans dommage les températures de brasage, et bon isolant thermique, c'est-à-dire mauvais conducteur de chaleur, de façon à limiter la perte de calories à travers le fond de l'embouti 6 pendant la brasage. La partie supérieure isolante 22 comporte une saillie axiale de centrage 23 vers le bas qui s'insère dans une cavité 24 pratiquée dans la partie supérieure de la base 21. Cette surépaisseur centrale 23 permet d'assurer, d'une part, le centrage de la partie 22 et, d'autre part, une meilleure isolation thermique de la partie centrale moins chauffée par l'inducteur 3 (voir FR-A-1 425 005 et 2 087 071), de façon à contribuer à l'homogénéisation de la distribution des températures dans l'interface entre les éléments 6 et 7. L'épaisseur du disque isolant 22 est, généralement, supérieure à 10 millimètres et celle de la base 21, supérieure à 20 millimètres.

Un tel agencement est relativement bien adapté pour recouvrir le fond plan de l'embouti 6 avec un revêtement diffuseur 7 simple sous la forme d'une plaque d'aluminium de 4 à 8 millimètres d'épaisseur ou même plus épaisses, où la brasure utilisée exige une fourchette relativement étroite de températures de brasage (570 à 585°C), du fait du point de fusion relativement proche de l'aluminium et de la brasure. Il permet également de rapporter une couche 7 de cuivre de quelques millimètres à un embouti 6 d'acier inoxydable austénitique, car dans ce cas la brasure et le cuivre ont des points de fusion respectifs suffisamment éloignés.

Toutefois, lorsque l'on désire de rapporter des revêtements d'aluminium ou d'un de ses alliages d'une épaisseur inférieure à la précitée à l'aide d'un tel dispositif, les résultats ne paraissent pas toujours donner entière satisfaction, car la faible fourchette de fusion de la brasure utilisée, de 6 ou 7° C autour de 575° C, fait apparaître, du fait de la non-uniformité du chauffage, c'est-à-dire l'hétérogénéité de la distribution des températures dans l'interface entre le fond de l'embouti 6 et le revêtement 7, en fonction de la distance radiale par rapport à l'axe, des zones sous- ou surchauffées, où le joint ne présente ni la tenue mécanique requise, ni l'uniformité, sur toute l'interface, de la conduction themique entre le revêtement 7 et le fond de l'embouti 6 (absence locale de joint brasé ou bulles formées par le passage en phase gazeuse de quelques unes des composantes de la brasure).

Le mandrin 30 de la figure 2, permet de réduire l'inhomogénéité des températures, sans intervenir sur le bilan calorifique de l'opération.

Le mandrin 30 comprend, de même que celui 20 de la figure 1, une base 31 métallique en un alliage d'aluminium (d'épaisseur supérieure à 20 millimètres) qui porte un premier disque 32 en matériau isolant themique et réfractaire, de préférence, tel que la résine de silicones remplie de fibres d'amiante (»SYNDANIO«) susmentionnée, dont l'épaisseur est, de préférence, comprise entre 6 et 12 millimètres qui varie toutefois en fonction du diamétre de l'article et d'autres paramètres déterminés expérimentalement.

Le haut du premier disque isolant 32 porte, au moyen d'un logement en creux 33 pratiqué dans sa face supérieure, un second disque en cuivre 34 dont l'épaisseur est légèrement supérieure à la profondeur du logement 33 et qui entre en contact avec la face interne du fond de l'embouti pendant le brasage par induction, de façon à égaliser assez rapidement la température de ce côté du fond, dans le sens radial.

L'expérience a montrée qu'une telle disposition avec des épaisseurs du disque de cuivre 34 comprises entre deux et cinq millimètres et dont le diamètre est au moins légèrement supérieur à celui du revêtement diffuseur 7 qui peut être une plaque d'aluminium simple ou composé de deux plaques superposées dont l'inférieure est en aluminium et la supérieure en acier inoxydable, avec des épaisseurs hors tout comprises entre 3,5 et 6 millimètres environ, permet d'obtenir une homogénéisation radiale convenable de la température du film de brasure dans les interfaces respectifs. L'utilisation du second disque 34 permet de braser également des semelles métalliques relativement épaisses englobant des résistances électriques.

Toutefois, le déchargement de l'article brasé devrait être suivi à bref délai du dépôt d'un nouvel embouti pour limiter les pertes de température par la face supérieure du disque en cuivre 34 qui engendre dès variations de la température initiale de l'embouti 6 (et du revêtement 7 déposé sur celui-ci), lorsque l'objet arrive au poste de brasage. Ceci peut entraîner des températures de brasage différentes, car l'énergie apportée par l'inducteur 3 est supposée constante. Par ailleurs, un tel agencement du mandrin souffre des inconvénients engendrés par l'oxydation et la déformation du disque de cuivre 34.

Une étude approfondie des capacités calorifiques, des conductibilités et effusivités thermiques de divers matériaux entrant en jeu et une expérimentation consécutive laborieuse a permis à la demanderesse de dégager une solution de compromis qui semble à l'heure actuelle optimale en tenant compte des divers phénomènes intervenant dans le processus, et qui présente des avantages notables par rapport aux précédentes réalisations connues.

Le mode de réalisation préféré du mandrin 40 suivant l'invention, qui a été représenté sur la figure 3, résulte d'une modification notamment des dimensions (épaisseur) du composant métallique en cuivre et de l'adjonction à celui-ci, par superposition, d'un composant supplémentaire en un matériau lamellaire à base de graphique expansé, connu en soi, présentant des propriétés anisotropiques en ce qui concerne sa conductibilité et son effusivité thermiques, sa résistivité électrique et ses propriétés mécaniques, qui sont avantageusement appliquées ici pour arriver à un compromis technique satisfaisant de plusieurs exigences contradictoires, qui sera explicité, en partie, ci-après.

L'expérience a montré que, lorsque la brasure permettant de joindre de l'aluminium et de l'acier reste trop longtemps en fusion, c'est-à-dire à une température de l'ordre de 580° C, la résistance mécanique des joints brasés se détériore du fait de la mise en solution du silicate d'alumine et des composés résiduels du flux dans la brasure fondue. Pour éviter cette détérioration, le maintien du joint à la température de brasage doit être aussi bref que possible. Il paraît donc avantageux d'utiliser un matériau à faible inertie thermique entrant en contact immédiat avec le revêtement 7 et le fond de l'embouti 6. Comme il n'est pas possible de modifier la composition de l'empilage du côté inducteur, car le susceptor 5 en acier ferritique est nécessairement en contact avec le disque isolant et réfractaire 4 protégeant le bloc 2 en résine, c'est du côté du mandrin de support qu'il faut réduire l'inertie thermique. Ceci n'est pas le cas du cuivre dont la capacité calorifique qui est le produit de sa densité avec sa chaleur spécifique, est importante. Cette propriété est utile pour constituer un réservoir de chaleur au niveau du mandrin, pour assurer un préchauffage efficace de l'embouti 7, lorsqu'il y repose avant le brasage, mais elle ne permet pas le refroidissement rapide du joint brasé à l'interface des plaques. Pour disposer d'une masse suffisante de cuivre afin de constituer ce réservoir de chaleur, il est nécessaire d'augmenter l'épaisseur du disque ce qui le rend rigide et, de ce fait, ne permet pas de bien répartir la pression exercée sur l'empilage du fond de l'embouti 6 et de la ou des (sandwich) plaques de revêtement 7 superposées et d'améliorer le contact thermique entre les faces inférieure du fond et supérieure du mandrin.

L'expérience de la demanderesse a montrée que d'interposer entre le disque de cuivre qui joue ici le rôle d'un réservoir de calories pour économiser l'énergie apportée à chaque cycle, et le fond de l'embouti 6 dont les calories apportées par le chauffage inductif doivent être, d'une part, réparties uniformément sur toute l'interface de brasage et, d'autre part, évacuées rapidement vers le réservoir en cuivre, un disque dans un matériau souple, compressible (élastique) et bon conducteur de température (effusivité thermique élevée), présente des avantages notables par rapport à l'état de la technique.

Un tel matériau est avantageusement constitué par un graphite souple de structure lamellaire (comme le mica naturel) obtenu par un procédé décrit, par exemple, dans la publication FR-A-2 065 763 précitée qui enseigne la méthode d'obtention d'un matériau carboné élastique et résistant aux hautes températures, de structure lamellaire et de faible densité (masse spécifique), par la dégradation d'un composé d'insertion. Ce matériau est commercialisé sous la marque déposée de »PAPYEX« de type »S« (»E« ou »N«) par la société française »LE CARBONE-LORRAINE«. Il présente une excellente tenue en température (500°C en atmosphère oxydante), une insensibilité aux chocs thermiques et des propriétés élastiques particulièrement adaptées à la présente application qu'il conserve jusqu'aux plus hautes températures d'utilisation (2500°C en atmosphère inerte). Cette souplesse et cette déformabilité (compressibilité et flexibilité) assurent dans tous les cas, d'une part, un excellent contact entre la face intérieure du fond de l'embouti 6 et la face supérieure du troisième disque 49 qui ne s'oxyde ni ne se déforme durablement, et d'autre part, une répartition sensiblement homogène des pressions partielles s'exerçant sur différentes portions des deux plaques à braser. La faible densité du matériau graphitique utilisé a pour conséquence une inertie thermique peu élevée dont on profite au cours du refroidissement de l'article brasé.

Par ailleurs, l'anisotropie de sa conductibilité thermique, notamment, est extrêmement avantageuse dans son application suivant la présente invention. Cette conductibilité est entre 100 et 200 fois supérieure dans le plan des lamelles que normalement à celui-ci. Ceci permet une excellente homogénéisation (uniformisation) de la distribution des températures à l'interface, tont en assurent une évacuation suffisante de la chaleur après le brasage en direction du second disque réservoir en cuivre. Cette anisotropie de la conductibilité thermique permet de réduire l'évacuation de la chaleur du second disque réservoir (par conduction) vers le haut, après l'enlèvement de l'articles brasé.

Le mandrin 40 selon le mode de réalisation préféré de l'invention, illustré par la figure 3, comporte une base 41 en aluminium ou en un alliage alumineux (»DURAL« marque déposée, par exemple) dont la face inférieure comporte une cavité 42 et un ajutage axial 43 permettant d'y loger une rotule 44 en acier s'engageant avec l'épaulement 12 et la saillie 14 de l'extrémité supérieure de la tige 9. La face supérieure comporte un évidement (cavité) circulaire 45 permettant d'y loger un premier disque 46 isolant et réfractaire (»SYNDANIO«). La profondeur de l'évidement 45 est inférieure à la moitié de l'épaisseur du disque 46. Sur la face supérieure de ce dernier (46) est posé un second disque de cuivre 47 qui constitue le réservoir de chaleur du mandrin 40. Son pourtour est formé par une ceinture 48 en forme de couronne (anneau) dépassant son épaisseur vers le bas, pour permettre son centrage par rapport au premier disque isolant 46, et vers le haut, pour permettre d'y centrer le troisième disque élastique en graphite lamellaire expansé 49. La cavité inférieure formée par la ceinture 48 a une profondeur inférieure à la moitié de l'épaisseur du premier disque isolant 46 et la cavité supérieure qu'elle forme a une profondeur de l'ordre des deux tiers de l'épaisseur du troisième disque en graphite 49, par exemple.

Un tel agencement permet, d'une part, un gain de temps important sur le cycle de brasage total (incluant le chauffage par induction sous pression et le refoidissement rapide de l'article brasé) et, d'autre part, une économie d'énergie, car le réservoir de chaleur (disque 47) en cuivre conserve une température moyenne supérieure à 400°C qui permet le préchauffage de l'embouti 7 avant le brasage qui, par conséquent, nécessitera un apport d'énergie moindre qu'avec un mandrin à partie supérieure à base d'amiante (de la figure 1 ou de l'art antérieur).

Par ailleurs, l'excellente effusivité thermique dans le sens radial (par rapport à l'axe de symétrie commun du mandrin 40, du bloc inducteur 2 et de l'embouti 6) du troisième disque graphitique 49, permet une égalisation meilleure de la distribution des températures dans le sens radial, et sa conductibilité inférieure dans le sens axial permet une réduction du gradient des températures entre lui et le susceptor 5 de façon à faciliter le brasage des revêtements multicouches (»sandwichs« acier et aluminium ou cuivre).

L'épaisseur du troisième disque en graphite lamellaire (»PAPYEX«) 49 est supérieure à 1 millimètre et, de préférence, inférieure à 4 millimètres, celle du second disque en cuivre 47 (réservoir) est, de préférence, comprise entre 6 et 12 millimètres, celle du premier disque isolant et réfractaire 45 est, de préférence, comprise entre 4 et 16 millimètres et celle de la base en aluminium ou en son alliage 41 est, de préférence, comprise entre 20 et 35 millimètres, suivant la dimension radiale (diamètre) de l'embouti 6 et au moins sur un diamètre au moins légèrement supérieur à celui du revêtement 7.

En présence d'un rotule en acier 42 assurant la liaison entre le bout (12, 14) de la tige 9 et son relatif isolement thermique par rapport à la base 41 du mandrin 40, celle-ci est munie, dans sa variante préférée, d'un radiateur en forme de rondelle 50, de diamètre extérieur supérieur à celui de l'embouti 6, fixé à la face inférieure de la base 41 au moyen d'entretoises 51 disposées symétriquement par rapport à l'axe du mandrin 40 et de vis 52 réalisées en aluminium ou dans le même alliage d'aluminium que cette base 41. Cette rondelle 50 formant une ailette augmente la surface de contact avec l'air ambiant de façon à faciliter l'évacuation de la chaleur de la base 41 sans réchauffer outre mesure la tige 9. Son épaisseur est comprise entre 5 et 15 millimètres, par exemple.

Pour un article 6 de diamètre intérieur de 275 millimètres, l'épaisseur de la base 41 en alliage d'aluminium est choisie de 27 millimètres, celle du premier disque isolant 46 de 6 millimètres, celle du second disque réservoir en cuivre de 10 millmètres et celle du troisième disque lamellaire à base de graphite 49 de 3 millimètres, par exemple.

Pour remédier à l'inconvénient de la plupart des inducteurs plats 3 de type connu, qui consiste en un moindre chauffage dans les environs de l'axe de symétrie, il peut s'avérer avantageux de réduire la conduction des claories dans le disque en cuivre 47 en y pratiquant par perçage des ouvertures 53 le traversant de part en part, régulièrement disposées dans une zone centrale de celui-ci.

La base 41 n'est pas obligatoirement aux dimensions de jupe latérale de l'embouti 6, mais dans ce cas elle comporte une saillie radiale 54, par exemple annulaire, permettant le centrage de celui-ci.

On remarquera encore ici que dans ses réalisations les plus intéressantes, le mandrin est composé de disques empilables ou emmanchables les uns dans les autres de façon amovible, pour permettre leurs remplacements aisés, lors de l'usure de l'un des éléments ou du changement de diamètre de l'article.

## Revendications

1. Presse à braser par induction pour recouvrir l'une des faces du fond plan d'une pièce métallique (6) par un revêtement métallique (7) et comprenant, monté sur un bâti (1) fixé au sol, un bloc inducteur rigide en matériau isolant (2) contenant un inducteur (3) de chauffage destiné à être alimenté en courant alternatif et un vérin comprenant une tige mobile axialement et coaxiale avec le bloc (2), destiné à assurer le mouvement relatif de ce bloc (2) et de la pièce (6) portant le revêtement (7) et à exercer une pression sur ces derniers, et au moins un mandrin (40) destiné à supporter la pièce (6) et comportant superposés: une base métallique (41) couplée au bâti ou à la tige du vérin, un premier disque (46) en un matériau réfractaire et isolant thermique, et un second disque métallique (47), caractérisée en ce que chaque mandrin (40) comporte, en outre, posé sur le second disque métallique (47), un troisième disque (49) réalisé en un matériau de type connu en soi, à base de graphite expansé à structure lamellaire orientée parallèlement au fond de la pièce (6), présentant une forte anisotropie de sa conductibilité thermique de manière à homogénéiser la distribution de températures à l'interface de son contact avec l'autre face du fond de la pièce (6) et une compressibilité notable de manière à uniformiser les pressions exercées sur les différentes portions de l'interface entre le fond de la pièce (6) et le revêtement (7) dont les dimensions radiales sont au moins légèrement inférieures à celles du troisième disque (49).

2. Presse à braser suivant la revendication 1, caractérisée en ce que le second disque (47) est en un métal ou alliage bon conducteur de température et à capacité calorifique élevée, tel que le cuivre, le second disque (47) ayant des dimensions radiales au moins légèrement supérieures à celles du revêtement (7).

3. Presse à braser suivant la revendication 2, caractérisée en ce que l'épaisseur du second disque en cuivre (47) est supérieure à six millimètres de sorte qu'il constitue un réservoir de chaleur conservant à la partie supérieure du mandrin (40) une température élevée.

4. Presse à braser suivant l'une quelconque des revendications précédentes, caractérisée en ce que l'épaisseur du troisième disque (49) à base de graphite est supérieure à un millimètre.

5. Presse à braser suivant l'une quelconque des revendications 2 à 4, caractérisée en ce que l'épaisseur du premier disque isolant (46) est supérieure à quatre millimètres.

6. Presse à braser, suivant l'une quelconque des revendications 2 à 5, caractérisée en ce que l'épaisseur de la base métallique (41) est supérieure à vingt millimètres.

7. Presse à braser suivant l'une quelconque des revendications 3 à 6, caractérisée en ce que l'épaisseur du troisième disque (49) est comprise entre un et quatre millimètres, celle du second disque en cuivre (47) entre six et douze millimètres, celle du premier disque isolant (46) entre quatre et seize millimètres et celle de la base métallique (41) entre vingt et trente cinq millimètres.

8. Presse à braser suivant l'une quelconque des revendications 2 à 7, caractérisée en ce que le second disque en cuivre (47) est pourvu dans sa zone centrale de trous (53) axialement orientés, le traversant de part en part, afin d'y réduire sa conductibilité thermique.

9. Presse à braser suivant l'une quelconque des revendications précédentes, caractérisée en ce que la base (41) est réalisée en aluminium ou en un alliage de ce métal.

10. Presse à braser suivant la revendication 9, caractérisée en ce que la base (41) en aluminium ou en un alliage de ce métal, est munie d'un radiateur (50) en forme de rondelle, fixé à la face inférieure de la base (41) dont il dépasse le diamètre, éventuellement au moyen d'entretoises (51) en un matériau métallique analogue.

## Patentansprüche

1. Presse zum Induktionshartlöten zur Beschichtung einer der Flächen des ebenen Bodens eines Metallteils (6) mit einer Metallschicht (7), enthaltend, aufgebaut auf einem am Boden befestigten Gerüst (1), einen starren Induktorblock aus Isoliermaterial (2), der einen Heizinduktor (3) enthält, welcher dazu bestimmt ist, mit Wechselstrom gespeist zu werden, und einen Arbeitszylinder mit einer in Axialrichtung beweglichen, mit dem Block (2) koaxialen Stange zum Gewährleisten der Relativbewegung zwischen diesem Block (2) und dem die Beschichtung (7) tragenden Teil (6) und Ausüben eines Drucks auf diese, und wenigstens einen Aufnahmedorn (40), der dazu bestimmt ist, das Teil (6) zu halten, und der übereinander angeordnet umfaßt: einen metallischen Sockel (41), der an das Gerüst oder an die Stange des Arbeitszylinders angekoppelt ist, eine erste Scheibe (46) aus einem hitzebeständigen und wärmeisolierenden Material und eine zweite Scheibe (47) aus Metall, dadurch gekennzeichnet, daß jeder Aufnahmedorn (40) ferner eine auf die zweite Scheibe (47) aus metall aufgelegte dritte Scheibe (49) umfaßt, die aus einem Material von an sich bekannter Art auf der Basis von expandiertem Graphit mit einer Lamellenstruktur gebildet ist, die parallel zum Boden des Teils (6) orientiert ist und eine starke Anisotropie ihrer Wärmeleitfähigkeit aufweist, so daß die Temperaturverteilung in der Grenzschicht ihres Kontaktes mit der anderen Fläche des Bodens des Teils (6) homogen gemacht wird, sowie eine beträchtliche Kompressibilität aufweist, so daß die auf die verschiedenen Teile der Grenzfläche zwischen dem Boden des Teils (6) und der Beschichtung (7) ausgeübten Drücke gleichmäßig gemacht werden, wobei die radialen Abmessungen der Beschichtung wenigstens etwas kleiner als diejenigen der dritten Scheibe (49) sind.

2. Hartlötpresse nach Anspruch 1, dadurch gekennzeichnet, daß die zweite Scheibe (47) aus einem Metall oder einer Legierung mit guter Wärmeleitfähigkeit und hoher Wärmekapazität wie Kupfer ist und radiale Abmessungen aufweist, die wenigstens etwas größer als diejenigen der Beschichtung (7) sind.

3. Hartlötpresse nach Anspruch 2, dadurch gekennzeichnet, daß die Dicke der zweiten Scheibe (47) aus Kupfer größer als sechs Millimeter ist, so daß sie einen Wärmevorrat bildet, durch den im oberen Teil des Aufnahmedorns (40) eine hohe Temperatur aufrechterhalten bleibt.

4. Hartlötpresse nach einem der vorstehenden Ansprüche, dadurch gekennzeichnet, daß die Dicke der dritten Scheibe (49) auf Graphitbasis mehr als ein Millimeter ist.

5. Hartlötpresse nach einem der Ansprüche 2 bis 4, dadurch gekennzeichnet, daß die Dicke der ersten, isolierenden Scheibe (46) größer ist als vier Millimeter.

6. Hartlötpresse nach einem der Ansprüche 2 bis 5, dadurch gekennzeichnet, daß die Dicke des Metallsockels (41) größer als zwanzig Millimeter ist.

7. Hartlötpresse nach einem der Ansprüche 3 bis 6, dadurch gekennzeichnet, daß die Dicke der dritten Scheibe (49) zwischen ein und vier Millimetern beträgt, die der zweiten Scheibe (47) aus Kupfer zwischen sechs und zwölf Millimeter beträgt, die der ersten, isolierenden Scheibe (46) zwischen vier und sechzehn Millimeter und des Metallsockels (41) zwischen zwanzig und fünfunddreißig Millimeter beträgt.

8. Hartlötpresse nach einem der Ansprüche 2 bis 7, dadurch gekennzeichnet, daß die zweite Scheibe (47) aus Kupfer in ihrer zentralen Zone mit Löchern (53) versehen ist, die axial orientiert sind und sie von einer Seite zur anderen durchqueren, um dort ihre Wärmeleitfähigkeit zu vermindern.

9. Hartlötpresse nach einem der vorstehenden Ansprüche, dadurch gekennzeichnet, daß der Sockel (41) aus Aluminium oder einer Legierung dieses Metalls gebildet ist.

10. Hartlötpresse nach Anspruch 9, dadurch gekennzeichnet, daß der Sockel (41) aus Aluminium oder einer Legierung dieses Metalls mit einem rundscheibenförmigen Radiator (50) versehen ist, der auf der unteren Fläche des Sockels (41) befestigt ist, dessen Durchmesser er übersteigt, gegebenenfalls mittels Streben (51) aus einem analogen metallischen Material.

## Claims

1. Press for induction-brazing for providing one of the faces of the plane bottom of a metallic piece (6) with a metallic covering (7) and comprising a rigid inductor block formed of an insulating material (2) ans mounted on a stand (1) secured on the ground, and containing a heating inductor (3) adapted to be fed by an alternating current and a jack comprising an axially movable rod which is coaxial with the block (2) for assuring the relative movement of this block (2) and the piece (6) carrying the covering (7) and exerting a pressure onto the latter, and at least one mandrel (40) for supporting the piece (6) and comprising in superposition: a metallic base (41) coupled to the stand or to the rod of the jack, a first disc (46) of a refractory, thermally insulating material, and a second metallic disc (47), characterized in that each mandrel (40) further comprises a third disc (49) disposed on the second metallic disc (47) and formed of a material which is known per se, based on expanded graphite having a lamellated structure oriented in parallel to the bottom of the piece (6) and having a high anisotropy of its thermal conductivity in a manner to homogenize the temperature distribution at the interface of its contact with the other face of the bottom of the piece (6), and a marked compressibility in a manner to render uniform the pressures exerted onto the different portions of the interface between the bottom of the piece (6) and the covering (7) the radial dimensions of which are at least slightly smaller than those of the third disc (49).

2. Brazing press according to claim 1, characterized in that the second disc (47) is of a metal or alloy having a good heat conductivity and high heat capacity such as copper, the second disc (47) having radial dimensions at least slightly exceeding those of the covering (7).

3. Brazing press according to claim 2, characterized in that the thickness of the second copper disc (47) exceeds six millimeters so that it forms a heat reservoir conserving a high temperature in the upper portion of the mandrel (40).

4. Brazing press according to any of the preceding claims, characterized in that the thickness of the third disc (49) of graphite type exceeds one millimeter.

5. Brazing press according to any of claims 2 to 4, characterized in that the thickness of the first insulating disc (46) exceeds four millimeters.

6. Brazing press according to any of claims 2 to 5, characterized in that the thickness of the metallic base (41) exceeds twenty millimeters.

7. Brazing press according to any of claims 3 to 6, characterized in that the thickness of the third disc (49) is between one and four millimeters, that of the second copper disc (47) between six and twelve millimeters, that of the first insulating disc (46) between four and sixteen millimeters and that of the metallic base (41) between twenty and thirty-five millimeters.

8. Brazing press according to any of claims 2 to 7, characterized in that the second copper disc (47) is provided with axially oriented holes (53) within its central zone ans traversed by these holes from one side to the other in order to reduce its thermal conductivity.

9. Brazing press according to any of the preceding claims, characterized in that the base (41) is formed of aluminium or an alloy of this metal.

10. Brazing press according to claim 9, characterized in that the base (41) of aluminium or an alloy of this metal is provided with a washer-shaped radiator (50) secured onto the underside of the base (41) projecting beyond its diameter, eventually using braces (51) of an analog metallic material.

9

FIG_1

FIG_2

FIG_3

0228